# EUROPÄISCHE PATENTSCHRIFT

(11) **EP 4 096 170 B1**
(45) Veröffentlichungstag und Bekanntmachung des Hinweises auf die Patenterteilung: **31.07.2024**
(21) Anmeldenummer: 22169648.7
(22) Anmeldetag: 25.04.2022
(51) Int. Cl.: H04L 12/46

(54) **VERFAHREN ZUR DATENÜBERTRAGUNG IN EINEM NETZWERKSYSTEM SOWIE NETZWERKSYSTEM**
METHOD FOR DATA TRANSMISSION IN A NETWORK SYSTEM AND NETWORK SYSTEM
PROCÉDÉ DE TRANSMISSION DE DONNÉES DANS UN SYSTÈME DE RÉSEAU, AINSI QUE SYSTÈME DE RÉSEAU

(30) Priorität: 27.05.2021 DE 102021113670
(43) Veröffentlichungstag der Anmeldung: 30.11.2022
(73) Patentinhaber: dSPACE GmbH, 33102 Paderborn (DE)
(72) Erfinder: SCHEDLER, Stephan, 33102 Paderborn (DE); SCHNIEDERMANN, Moritz, 33102 Paderborn (DE); IGEL, Carsten, 33102 Paderborn (DE)

(56) Entgegenhaltungen:
- EP-A1- 3 343 881
- US-A1- 2016 350 151
- US-A1- 2019 158 396

## Beschreibung

Die vorliegende Erfindung betrifft ein Verfahren zur Datenübertragung in einem Netzwerksystem. Des Weiteren betrifft die vorliegende Erfindung ein entsprechendes Netzwerksystem.

### Stand der Technik

Ein herkömmliches, erstes Benutzer-Netzwerkknoten-Ziel-Netzwerkknoten-Szenario ohne Vorhandensein eines Clusters besteht beispielsweise aus einem einzelnen Benutzer-Netzwerkknoten wie z.B. einem Browser auf einem Desktop-PC, der einen Dienst wie z.B. eine HTML-Seite herunterzuladen anfordert und einem Ziel-Netzwerkknoten z.B. einem Webserver, der den angeforderten Dienst bereitstellt.

Der Benutzer-Netzwerkknoten und der Ziel-Netzwerkknoten hosten die entsprechenden Anwendungen und sind über Ethernet-Schnittstellen, z.B. "eth0", mit demselben Netzwerk verbunden. Um den Dienst nutzen zu können, muss der Benutzer-Netzwerkknoten die Dienstadresse kennen, die sich aus der Ziel-Netzwerkknoten-IP-Adresse, z.B. 192.168.0.1, und einem Dienst-Port, z.B. 80 für HTTP- oder 443 für HTTPS-Verbindungen, zusammensetzt.

Der Port wird benötigt, um die Dienstanwendung zu identifizieren, die auf dem Ziel-Netzwerkknoten betrieben wird. Um Antworten vom Ziel-Netzwerkknoten empfangen zu können, weist der Benutzer-Netzwerkknoten eine eigene Benutzer-IP-Adresse auf und lauscht auf dem Benutzer-Port.

Der Service-Provider verwendet hierzu normalerweise einen vordefinierten, statischen Port, da dieser Port jedem Benutzer bekannt sein muss, um eine Verbindung zu initiieren. Der Benutzer-Port hingegen kann dynamisch erstellt werden, da er dem Provider bei der ersten Verbindungsanfrage des Benutzers bekannt gemacht werden kann.

Die Grundidee des Cloud Computing ist es, hunderte oder sogar tausende von Service-Anwendungen on-demand zu instanziieren, die jeweils gekapselt in einer Laufzeitumgebung, z.B. einem Container oder einer virtuellen Maschine, laufen. Ein gängiges Beispiel für eine solche Service-Anwendung ist eine Webserver-Anwendung, die auf einem vordefinierten Port auf HTTP- oder HTTPS-Anfragen lauscht.

Dokument US 2019/158396 A1 offenbart ein Paketverarbeitungsverfahren in einem Computersystem. Das Rechnersystem umfasst einen Host, wobei mindestens eine Netzwerkschnittstellenkarte mit dem Host verbunden ist. Die Netzwerkschnittstellenkarte umfasst eine Vermittlungseinrichtung und mindestens zwei Netzwerkanschlüsse. Ein erster Netzwerkanschluss entspricht mindestens einer physikalischen Funktion PF und mehreren virtuellen Funktionen VF. Mindestens eine VF des ersten Netzwerkanschlusses wird für eine erste virtuelle Maschine auf dem Host in einer Passthrough-Methode bereitgestellt. Die erste virtuelle Maschine sendet ein Datenpaket von der VF, die mit der ersten virtuellen Maschine verbunden ist. Die Vermittlungseinrichtung des ersten Netzwerkanschlusses leitet das Datenpaket entsprechend einer Ziel-MAC-Adresse des Datenpakets weiter und sendet das Datenpaket an eine virtuelle Brücke im VMM des Hosts. Der VMM bietet ferner eine Netzwerkfunktionsverarbeitung für das Datenpaket.

Alternativ kann beispielsweise der Ziel-Netzwerkknoten im Rahmen eines zweiten Benutzer-Netzwerkknoten-Ziel-Netzwerkknoten-Szenario in einem anderen (Sub-)Netzwerk betrieben werden. Beide Knoten haben keine direkte Verbindung mehr, d.h. der Benutzer-Netzwerkknoten kann den Ziel-Netzwerkknoten nicht direkt erreichen und umgekehrt. Ein einfaches Beispiel für einen solchen Aufbau ist ein Cluster, bei dem der Ziel-Netzwerkknoten im Cluster instanziiert ist und der Benutzer-Netzwerkknoten außerhalb des Clusters betrieben wird.

Beide Knoten sind an unterschiedliche Netzwerke angeschlossen, die im Folgenden als interne und externe Netzwerke bezeichnet werden. Es gibt einen Zugangsknoten, der Zugang zu beiden Netzwerken hat, dem clusterinternen und dem clusterexternen Netzwerk. Anstatt eine Dienstanforderung an die Ziel-IP und den Service-Port zu senden, wird die anfängliche Verbindungsanforderung vom Benutzer-Netzwerkknoten an die IP und den Zugriffs-Port des Zugangsknotens gesendet und von dort wiederum an die IP und den Zugriffs-Port des Clusterknotens bzw. Ziel-Netzwerkknotens gesendet.

Der Ziel-Netzwerkknoten ist derart konfiguriert, dass dieser den Dienst dem externen Netzwerk am Zugangsport zur Verfügung stellt, d.h. jede Anfrage vom Benutzer-Netzwerkknoten des externen Netzwerks an den Zugangsport wird an den Ziel-Netzwerkknoten im internen Netzwerk an dessen Serviceport weitergeleitet.

In den vorstehend genannten beiden Anwendungsszenarien wird die erste Verbindungsanfrage an einen statischen (bekannten) Port gerichtet. Im ersten Anwendungsszenario können in der nachfolgenden Kommunikation weitere dynamisch zugewiesene Ports verwendet werden. Dazu können neue Ports von Anwendungen auf dem Ziel-Netzwerkknoten dynamisch zugewiesen werden und der bestehende, initiale Kommunikationspfad kann genutzt werden, um dem Benutzer-Netzwerkknoten die Verfügbarkeit der neuen Ports und der zugehörigen Dienste zu signalisieren.

Im zweiten Anwendungsszenario ist dies jedoch nicht möglich. Auch wenn neue Ports im Ziel-Netzwerkknoten dynamisch zugewiesen werden können, sind diese vom externen Netzwerk aus nicht zugänglich. Das Freigeben von Ports, d.h. eine Port-Weiterleitung, erfordert normalerweise eine statische Konfiguration.

Dieses Problem ist für Dienstanwendungen, die für die Ausführung in einem Cluster konzipiert sind, nicht relevant. Wenn man jedoch eine bestehende Anwendung hat, die dynamische Ports verwendet, kann es zu beträchtlichen Kosten führen, wenn es erforderlich ist, die Anwendung von dem ersten Anwendungsszenario in das zweite Anwendungsszenario zu portieren.

Aktuell ist es nicht möglich, Anwendungen, die eine dynamische Portzuweisung benötigen, mit gängiger Container-Orchestrierungssoftware wie z.B. Kubernetes zu betreiben, wenn der dynamische Port von außerhalb des Clusters erreichbar sein muss.

Es ist daher Aufgabe der Erfindung, ein Verfahren zur Datenübertragung in einem Netzwerksystem sowie ein entsprechendes Netzwerksystem vorzusehen, welche es ermöglichen, Anwendungen, die eine dynamische Portzuweisung benötigen, in einer benutzerrechteeingeschränkten Clusterumgebung zu betreiben.

### Offenbarung der Erfindung

Die Aufgabe wird erfindungsgemäß durch ein Verfahren zur Datenübertragung in einem Netzwerksystem mit den Merkmalen des Patentanspruchs 1 gelöst.

Darüber hinaus wird die Aufgabe erfindungsgemäß durch ein Netzwerksystem mit den Merkmalen des Patentanspruchs 11 gelöst.

Die Erfindung betrifft ein Verfahren zur Datenübertragung in einem Netzwerksystem. Das Verfahren umfasst ein Bereitstellen eines mit einem ersten Netzwerk verbundenen ersten Netzwerkelements, insbesondere eines Benutzer-Netzwerkknotens, und eines mit einem zweiten Netzwerk, insbesondere einem Cluster-Netzwerk, verbundenen zweiten Netzwerkelements, insbesondere eines Ziel-Netzwerkknotens, wobei das zweite Netzwerkelement nicht das Benutzerrecht aufweist, eine virtuelle Netzwerkschnittstelle zu erstellen.

Des Weiteren umfasst das Verfahren ein Bereitstellen eines, mit dem ersten Netzwerk verbundenen, physischen oder virtuellen, dritten Netzwerkelements und eines, mit dem zweiten Netzwerk verbundenen, physischen oder virtuellen, vierten Netzwerkelements.

Darüber hinaus umfasst das Verfahren ein Betreiben eines Netzwerk-Controllers des vierten Netzwerkelements in einem promiskuitiven Modus, und ein Erstellen eines IP-Tunnels zwischen dem ersten Netzwerk und dem zweiten Netzwerk, wobei das dritte Netzwerkelement und das vierte Netzwerkelement jeweilige Endpunkte des über ein Zugangs-Element geführten IP-Tunnels sind.

Die Erfindung betrifft überdies ein weiteres Verfahren zur Datenübertragung in einem Netzwerksystem umfassend ein Bereitstellen eines mit einem ersten Netzwerk verbundenen ersten Netzwerkelements, insbesondere eines Benutzer-Netzwerkknotens, und eines mit einem zweiten Netzwerk, insbesondere einem Cluster-Netzwerk, verbundenen zweiten Netzwerkelements, insbesondere eines Ziel-Netzwerkknotens, wobei das zweite Netzwerkelement nicht das Benutzerrecht aufweist, eine virtuelle Netzwerkschnittstelle zu erstellen.

Das Verfahren umfasst ferner ein Bereitstellen eines, mit dem zweiten Netzwerk verbundenen, physischen oder virtuellen, dritten Netzwerkelements sowie ein Betreiben eines Netzwerk-Controllers des dritten Netzwerkelements in einem promiskuitiven Modus.

Darüber hinaus umfasst das Verfahren ein Erstellen eines IP-Tunnels zwischen dem ersten Netzwerk und dem zweiten Netzwerk, wobei das erste Netzwerkelement und das dritte Netzwerkelement jeweilige Endpunkte des über ein Zugangs-Element geführten IP-Tunnels sind.

Die Erfindung betrifft des Weiteren ein Netzwerksystem zur Datenübertragung zwischen einem ersten Netzwerkelement und einem zweiten Netzwerkelement, umfassend ein mit einem ersten Netzwerk verbundenes erstes Netzwerkelement, insbesondere einen Benutzer-Netzwerkknoten.

Das Netzwerksystem umfasst ferner ein mit einem zweiten Netzwerk, insbesondere einem Cluster-Netzwerk, verbundenes zweites Netzwerkelement, insbesondere einen Ziel-Netzwerkknoten, wobei das zweite Netzwerkelement nicht das Benutzerrecht aufweist, eine virtuelle Netzwerkschnittstelle zu erstellen.

Darüber hinaus umfasst das Netzwerksystem ein, mit dem ersten Netzwerk verbundenes, physisches oder virtuelles, drittes Netzwerkelement, und ein, mit dem zweiten Netzwerk verbundenes, physisches oder virtuelles, viertes Netzwerkelement, wobei ein Netzwerk-Controller des vierten Netzwerkelements in einem promiskuitiven Modus betreibbar ist, und wobei das dritte Netzwerkelement und das vierte Netzwerkelement jeweilige Endpunkte eines über ein Zugangs-Element geführten IP-Tunnels sind.

Die Erfindung betrifft überdies ein weiteres Netzwerksystem zur Datenübertragung zwischen einem ersten Netzwerkelement und einem zweiten Netzwerkelement, umfassend ein mit einem ersten Netzwerk verbundenes erstes Netzwerkelement, insbesondere einen Benutzer-Netzwerkknoten.

Das Netzwerksystem umfasst ferner ein mit einem zweiten Netzwerk, insbesondere einem Cluster-Netzwerk, verbundenes zweites Netzwerkelement, insbesondere einen Ziel-Netzwerkknoten, wobei das zweite Netzwerkelement nicht das Benutzerrecht aufweist, eine virtuelle Netzwerkschnittstelle zu erstellen.

Darüber hinaus umfasst das Netzwerksystem ein, mit dem zweiten Netzwerk verbundenes, physisches oder virtuelles, drittes Netzwerkelement, wobei ein Netzwerk-Controller des dritten Netzwerkelements in einem promiskuitiven Modus betreibbar ist, wobei zwischen dem ersten Netzwerk und dem zweiten Netzwerk ein IP-Tunnel erstellt ist, wobei das erste Netzwerkelement und das dritte Netzwerkelement jeweilige Endpunkte des über ein Zugangs-Element geführten IP-Tunnels sind.

Eine Idee der Erfindung ist es somit, einen IP-Tunnel für Ethernet-Frames zu erstellen, wenn Benutzer- und/oder Ziel-Knoten in einer eingeschränkten Umgebung betrieben werden, die den Aufbau herkömmlicher IP-Tunnel nicht zulässt.

Ethernet-Frames, die vom Benutzer-Netzwerkknoten gesendet werden und für den Ziel-Netzwerkknoten bestimmt sind, müssen im externen Netzwerk erfasst und in das interne Netzwerk injiziert werden sowie umgekehrt.

Daher sind im Rahmen der Erfindung virtuelle Ethernet-Geräte bzw. Netzwerkelemente in das interne und externe Netzwerk eingefügt, die für das Erfassen, Weiterleiten und Einfügen der entsprechenden Ethernet-Pakete verantwortlich sind.

Dies muss jedoch mit eingeschränkten Fähigkeiten erfolgen, z.B. verfügbar für Knoten, die in einem Cluster betrieben werden.

Die Erfindung fügt zum dem oben genannten zweiten Anwendungsszenario zwei Tunnelendpunkte hinzu, einen Tunnel-Client-Knoten, d.h. das dritte Netzwerkelement, und einen Tunnel-Server-Knoten, d.h. das vierte Netzwerkelement. Der Tunnel-Server-Knoten und der Tunnel-Client-Knoten können alternativ beispielsweise umgekehrt als im vorliegenden Beispiel dargelegt angeordnet sein.

Der Server-Knoten wird innerhalb des internen Netzwerks mit einem statischen Port platziert, der über den Access-Knoten offengelegt wird. Im Uplink fängt der Tunnel-Client-Knoten den gesamten Verkehr des externen Netzwerks ab, indem er sein Ethernet-Gerät bzw. seine virtuelle Netzwerkschnittstelle/Netzwerkelement in einen promiskuitiven Modus versetzt und eingehende Pakete snifft. Der Begriff sniffen bezieht sich hierbei darauf, dass gezielt alle Pakete nach Paketen mit der gewünschten Adresse gefiltert werden. Die Funktionalität des Sniffens ist nur dann möglich, wenn sich das Ethernet-Gerät im promiskuitiven Modus befindet.

Alternativ kann das Ethernet-Gerät des entsprechenden Netzwerkknotens des externen Netzwerks beispielsweise in einem nicht-promiskuitiven Modus betrieben werden. In diesem Fall ist der Benutzer-Netzwerknoten mit einem weiteren Netzwerkgerät, insbesondere einer virtuellen TAP-Netzwerk-Schnittstelle, ausgestattet. Im Externen Netzwerk weist der Benutzer-Netzwerkknoten das Benutzerrecht auf, eine virtuelle Netzwerkschnittstelle zu erstellen.

Die für den Ziel-Netzwerkknoten bestimmten Pakete vom Benutzer-Netzwerkknoten werden (über den Zugangsknoten) an den Tunnel-Server-Knoten weitergeleitet. Der Server-Knoten verwendet ebenfalls einen promiskuitiven Modus, um die getunnelten Ethernet-Frames in das interne Netzwerk zu übertragen, damit der Ziel-Netzwerkknoten diese empfangen kann.

Der Tunnel-Client-Knoten ist nicht notwendigerweise auf die gleichen eingeschränkten Berechtigungen beschränkt. Wenn der Client-Knoten über die erforderlichen Fähigkeiten verfügt, kann er beispielsweise eine vorhandene IP-Tunnel-Implementierungen verwenden. Aus Kompatibilitätsgründen könnte es jedoch sinnvoll sein, dieselbe Tunnel- (und IP-Stack-) Implementierung in beiden Tunnelendpunkten zu verwenden.

Die Kernidee der Erfindung besteht somit darin, einen Serverknoten in der eingeschränkten Umgebung hinzuzufügen und den promiskuitiven Modus in dessen Ethernet-Controller zu nutzen, um einen IP-Tunnel zum externen Netzwerk aufzubauen.

Dies ist auch in eingeschränkten Umgebungen wie Clustern möglich, da es andere Fähigkeiten als das Erstellen von traditionellen IP-Tunneln erfordert, die üblicherweise User-Space-Anwendungen gewährt werden, um Ethernet-Frames ohne IP-Protokoll wie ICMP-Frames, z.B. "ping" zu senden/empfangen.

In Linux-basierten Systemen erfordert dies z.B. NET_RAW-Fähigkeiten im Serverknoten. Die Nutzung dieser Fähigkeit innerhalb des Clusters ist standardmäßig möglich, da diese Fähigkeit auch von grundlegenden Linux-Netzwerk-Utilities wie "ping" zur Erzeugung von ICMP-Frames benötigt wird.

In der Erfindung wird von dieser Fähigkeit Gebrauch gemacht, um einen User-Space-Tunnel-Endpunkt bzw. IP-Tunnel-Endpunkt für das interne Netzwerk im Cluster zu erstellen, der Ethernet-Frames im internen Netzwerk (vom Ziel-Netzwerknoten zum Benutzer-Netzwerknoten) abfängt, diese Pakete an den anderen Tunnelendpunkt im externen Netzwerk weiterleitet sowie Ethernet-Frames (vom Benutzer-Netzwerknoten zum Ziel-Netzwerknoten) vom anderen IP-Tunnelendpunkt empfängt und diese Frames in das interne Netzwerk einspeist.

Der Tunnel-Client-Knoten kann äquivalent implementiert werden. Wenn dieser jedoch nicht an die gleichen eingeschränkten Rechte gebunden ist, kann dieser beispielsweise bestehende IP-Tunnel-Implementierungen nutzen.

Eine Implementierung der Erfindung benötigt auf Linux-basierten Systemen vorübergehend NET_ADMIN-Fähigkeiten im Server-Knoten, um sein Ethernet-Gerät in den promiskuitiven Modus zu versetzen.

In einem Cluster muss diese Fähigkeit dem Server-Knoten hinzugefügt werden, wenn er erstellt wird. Da sie nur beim Starten benötigt wird, kann der entsprechende Prozess die Fähigkeit nach dem Starten wieder löschen.

Damit eine IP-Kommunikation funktioniert, müssen alle Kommunikationspartner (Knoten) die IP- und MAC (/Hardware)-Adressen des anderen Knotens kennen. Da die MAC-Adressen zunächst unbekannt sind, werden als erster Schritt jeder IP-Kommunikation ARP-Broadcast-Requests gesendet.

Damit IP-Pakete im externen Netzwerk vom Benutzer-Netzwerkknoten über Netzwerk-Switches zum Client-Knoten geroutet werden, muss der Client-Knoten ARP-Anfragen des Benutzer-Netzwerkknotens beantworten, die für den Ziel-Netzwerkknoten bestimmt sind. Äquivalent dazu muss der Server-Knoten ARP-Anfragen vom Ziel-Netzwerkknoten beantworten, die für den Benutzer-Netzwerkknoten bestimmt sind.

Abhängig von der Routing-Policy im internen Netzwerk kann es sein, dass der Server-Knoten Pakete von Benutzer-Netzwerkknoten nicht senden bzw. weiterleiten darf, da sie nicht mit der dem Server-Knoten zugewiesenen IP- und MAC-Adresse übereinstimmen (IP-Spoofing).

In diesem Fall muss der Server-Knoten die IP- und MAC-Adresse des Benutzer-Netzwerkknotens verbergen, indem er die Adressen und Prüfsummen im rohen Ethernet-Frame durch seine eigenen Adressen ersetzt.

Wenn die IP des Benutzer-Knotens verschleiert ist, d.h. die Pakete des Benutzer-Knotens werden mit der IP- und MAC-Adresse des Server-Knotens weitergeleitet, muss der IP-Stack im Linux-Kernel des Server-Knotens deaktiviert werden, da er jedes empfangene IP-Paket beantworten würde, auch wenn es für den Benutzer-Knoten bestimmt ist.

Dies kann beispielsweise erreicht werden, indem die IP-Adresse im Server-Knoten nach dem Start gelöscht wird. Wenn sich die Ethernet-Schnittstelle des Server-Knotens im promiskuitiven Modus befindet, kann die Tunnelserver-Anwendung weiterhin rohe Ethernet-Frames erfassen und senden.

Eine Implementierung auf Linux-basierten Systemen benötigt vorübergehend NET_ADMIN-Fähigkeiten, um die IP-Adresse des Serverknotens zu löschen. Diese Fähigkeit wird nur beim Start benötigt und kann nach dem Start gelöscht werden.

Wenn die IP-Adresse des Server-Knotens wegfällt, führt dies zu einem neuen Problem. Da der lokale Kernel-IP-Stack keine empfangenen Pakete mehr verarbeitet, benötigt man eine User-Space-IP-Stack-Implementierung in der Tunnelanwendung, um Tunnelpakete zum und vom Client-Knoten zu generieren und zu parsen.

Darüber hinaus muss die Tunnelanwendung in der Lage sein, erfasste Frames vom Client-Knoten ("Tunnel-Frames") und erfasste Frames vom Provider-Knoten ("zu tunnelnde Frames") zu unterscheiden. Dies kann einfach durch die Auswertung der Quell-MAC-Adresse im Ethernet-Header erreicht werden.

Die Erfindung bietet somit eine Mehrzahl von Vorteilen wie z.B. Transparenz, d.h. die Lösung verändert weder die Konfiguration des Ziel- und/oder Benutzer-Netzwerkknotens noch deren Implementierungen, d.h. es entsteht kein Aufwand für die Portierung von Dienstanwendungen in ein Cluster-Setup mit eingeschränkten Nutzerrechten.

Ferner kann eine Standard-Clusterkonfiguration gewählt werden, d.h. es besteht keine Notwendigkeit, die Konfiguration von Clustern oder die Implementierung von Clustern z.B. durch Hinzufügen von Netzwerk-Plugins wie multus-cni für Kubernetes zu ändern.

Wenn der Cluster nicht auf eigenen Servern gehostest wird, sondern 3rd Party-Cluster-Dienste verwenden werden, ist der Nutzer unter Umständen nicht ausreichend berechtigt, die Konfiguration des Clusters zu ändern.

Die erfindungsgemäße Lösung ist daher mit eingeschränkten Rechten umsetzbar, die den Knoten in einem Cluster üblicherweise zur Verfügung stehen.

Ein Netzwerkknoten ist dabei eine Entität, die mit mindestens einem Ethernet-(Sub-)Netzwerk verbunden ist. Dies kann beispielsweise ein Docker-Container, ein Kubernetes-Pod, eine virtuelle Maschine, ein physischer PC oder eine Komposition bzw. Zusammensetzung aus mehreren Knoten sein. Der Netzwerkknoten weist eine eindeutige IP in angeschlossenen Ethernet-(Sub-) Netzwerk(en) auf. Der Begriff Netzwerkknoten wird dabei nicht synonym mit dem Cluster-Begriff Master/Worker Knoten verwendet.

Ein Computer-Cluster bzw. Cluster-Netzwerk ist eine Gruppe von lose oder eng miteinander verbundenen Computern, die so zusammenarbeiten, dass sie in vielerlei Hinsicht als ein einziges System betrachtet werden können.

Der Cluster wird von einer Container-Orchestrierungssoftware, z.B. Kubernetes, verwaltet, die verantwortlich ist für eine Bereitstellung von Containern, eine Skalierung, eine dynamische Ressourcenzuweisung (wie z.B. Rechenleistung, Netzwerk, Speicher), eine Zuverlässigkeit, einen Lastausgleich, eine Datenverkehrslenkung und eine Datensicherheit.

Das zweite Netzwerkelement, insbesondere das Cluster-Netzwerk, weist in der Regel nicht das Benutzerrecht auf, eine virtuelle Netzwerkschnittstelle zu erstellen. Der Grund hierfür liegt darin, dass der Service-Provider des Cluster-Netzwerks den Nutzern meist aus sicherheitstechnischen Gründen nur limitierte Benutzerrechte gewährt, da sich eine Vielzahl von Nutzern die vorhandenen Ressourcen teilen, wenn solche Cluster-Netzwerke beispielsweise in einer Cloud-Umgebung gehostet werden.
in einer Cloud-Umgebung von einer Vielzahl von Nutzern geteilt werden.

Der promiskuitive Modus ist ein Modus für Netzwerk-Schnittstellen-Controller, der den Controller dazu veranlasst, den gesamten Datenverkehr, den er empfängt, an eine Zentraleinheit (CPU) weiterzuleiten, anstatt nur die Frames weiterzuleiten, für deren Empfang der Controller speziell programmiert ist.

Die Nachricht ist ein Kommunikationspaket, d.h. ein erster bzw. innerer Bitstrom. Eine Hülle, in welche ein Netzwerkelement eine Nachricht verpackt, ist ein UDP-Paket bzw. ein äußerer Bitstrom. Dieser erste bzw. innere Bitstrom wird sodann in der Hülle, d.h. dem UDP-Paket bzw. äußerem Bitstrom verpackt.

Ein IP-Tunnel ist ein Netzwerkkommunikationskanal des Internetprotokolls zwischen zwei Netzwerken. Er wird verwendet, um ein anderes Netzwerkprotokoll durch Einkapselung seiner Pakete zu transportieren. Beim IP-Tunneling wird jedes IP-Paket, einschließlich der Adressierungsinformationen seines Quell- und Ziel-IP-Netzes, in ein anderes, für das Transitnetz natives Paketformat eingekapselt.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass von dem ersten Netzwerkelement eine erste Nachricht in das erste Netzwerk gesendet wird, wobei die erste Nachricht an eine IP-Adresse und einen Port des zweiten Netzwerkelements oder an eine IP-Adresse und einen Port eines anderen Netzwerkelements, welche durch ein weiteres Netzwerkelement, insbesondere das dritte Netzwerkelement und/oder vierte Netzwerkelement, in eine IP-Adresse und einen Port des zweiten Netzwerkelements umgewandelt wird, adressiert ist.

Gemäß einer weiteren bevorzugten Weiterbildung der Erfindung ist vorgesehen, dass das dritte Netzwerkelement in das erste Netzwerk eingehende Pakete der ersten Nachricht empfängt, wobei das dritte Netzwerkelement die erste Nachricht in eine erste Hülle verpackt, und wobei ein Netzwerk-Controller des dritten Netzwerkelements in einem promiskuitiven Modus oder einem nicht-promiskuitiven Modus betrieben wird.

Der Netzwerkcontroller des dritten Netzwerkelements empfängt somit die von dem Benutzer-Netzwerkknoten erstellte erste Nachricht und verpackt diese in die erste Hülle.

Gemäß einer weiteren bevorzugten Weiterbildung der Erfindung ist vorgesehen, dass die in die erste Hülle verpackte erste Nachricht an einen ersten Tunnel-Port des Zugangs-Elements adressiert ist und von dem dritten Netzwerkelement an den ersten Tunnel-Port des Zugangs-Elements gesendet wird. Das Zugangselement ermöglicht in vorteilhafter Weise die Übertragung der ersten Nachricht von dem ersten Netzwerk in das zweite Netzwerk.

Der erste Tunnel-Port des Zugangs-Elements ist derart vorkonfiguriert, dass der erste Tunnel-Port eingehende Nachrichten automatisch an das physische oder virtuelle vierte Netzwerkelement, insbesondere einen Server-Netzwerkknoten, sendet. Somit kann in vorteilhafter Weise eine effiziente Kommunikation mit dem vierten Netzwerkelemente erreicht werden.

Gemäß einer weiteren bevorzugten Weiterbildung der Erfindung ist vorgesehen, dass das physische oder virtuelle vierte Netzwerkelement, insbesondere der Server-Netzwerkknoten, die von dem Zugangs-Element empfangene, in die erste Hülle verpackte erste Nachricht entpackt, und wobei die entpackte erste Nachricht von dem vierten Netzwerkelement unter Verwendung des promiskuitiven Modus, über das zweite Netzwerk an das zweite Netzwerkelement, insbesondere den Ziel-Netzwerkknoten, gesendet wird. Die erste Nachricht kann somit unter Verwendung des IP-Tunnels von dem Benutzer-Netzwerkknoten über das dritte Netzwerkelement und das vierte Netzwerkelement an den Ziel-Netzwerkknoten gesendet werden.

Gemäß einer weiteren bevorzugten Weiterbildung der Erfindung ist vorgesehen, dass von dem zweiten Netzwerkelement, unter Verwendung eines dynamisch zugewiesenen Ports des zweiten Netzwerkelements, eine zweite Nachricht in das zweite Netzwerk gesendet wird, wobei die zweite Nachricht an eine IP-Adresse und einen Port des ersten Netzwerkelements adressiert ist.

Gemäß einer weiteren bevorzugten Weiterbildung der Erfindung ist vorgesehen, dass das vierte Netzwerkelement in das zweite Netzwerk eingehende Pakete der zweiten Nachricht unter Verwendung des promiskuitiven Modus des Netzwerk-Controllers des vierten Netzwerkelements empfängt, insbesondere snifft, und wobei das vierte Netzwerkelement die zweite Nachricht in eine zweite Hülle verpackt. Der Netzwerkcontroller des vierten Netzwerkelements empfängt somit die von dem Ziel-Netzwerkknoten erstellte zweite Nachricht und verpackt diese in die zweite Hülle.

Gemäß einer weiteren bevorzugten Weiterbildung der Erfindung ist vorgesehen, dass die in die zweite Hülle verpackte zweite Nachricht an einen zweiten Tunnel-Port des Zugangs-Elements adressiert ist und von dem vierten Netzwerkelement an den zweiten Tunnel-Port des Zugangs-Elements gesendet wird.

Das Zugangselement ermöglicht in vorteilhafter Weise die Übertragung der zweiten Nachricht von dem zweiten Netzwerk in das erste Netzwerk.

Gemäß einer weiteren bevorzugten Weiterbildung der Erfindung ist vorgesehen, dass der zweite Tunnel-Port des Zugangs-Elements dynamisch, insbesondere zur Laufzeit unter Verwendung von Informationen aus der ersten Nachricht, derart konfiguriert wird, dass der zweite Tunnel-Port eingehende Nachrichten automatisch an das physische oder virtuelle dritte Netzwerkelement, insbesondere einen Client-Netzwerkknoten, sendet. Somit kann in vorteilhafter Weise eine effiziente Kommunikation mit dem dritten Netzwerkelemente erreicht werden.

Gemäß einer weiteren bevorzugten Weiterbildung der Erfindung ist vorgesehen, dass das physische oder virtuelle dritte Netzwerkelement, insbesondere der Client-Netzwerkknoten, die von dem Zugangs-Element empfangene, in die zweite Hülle verpackte zweite Nachricht entpackt, und wobei die entpackte zweite Nachricht von dem dritten Netzwerkelement über das erste Netzwerk an das erste Netzwerkelement, insbesondere den Benutzer-Netzwerkknoten, gesendet wird.

Die zweite Nachricht kann somit unter Verwendung des IP-Tunnels von dem Ziel-Netzwerkknoten über das vierte Netzwerkelement und das dritte Netzwerkelement an den Benutzer-Netzwerkknoten gesendet werden.

Gemäß einer weiteren bevorzugten Weiterbildung der Erfindung ist vorgesehen, dass die erste Nachricht eine Sender-IP- und MAC-Adresse des ersten Netzwerkelements aufweist, wobei das dritte Netzwerkelement oder das vierte Netzwerkelement, die Sender-IP- und MAC-Adresse des ersten Netzwerkelements durch eine IP- und MAC-Adresse des vierten Netzwerkelements ersetzt. Somit kann in vorteilhafter Weise die erste Nachricht über den Umweg des dritten oder vierten Netzwerkelements an den Ziel-Netzwerkknoten adressiert werden.

Gemäß einer weiteren bevorzugten Weiterbildung der Erfindung ist vorgesehen, dass die zweite Nachricht eine Empfänger-IP- und MAC-Adresse, insbesondere das vierte Netzwerkelement, aufweist, wobei einer der Endpunkte des IP-Tunnels, insbesondere das erste Netzwerkelement, das dritte Netzwerkelement oder das vierte Netzwerkelement die Empfänger-IP- und MAC-Adresse der zweiten Nachricht durch eine IP- und MAC-Adresse des ersten Netzwerkelements ersetzt. Somit kann in vorteilhafter Weise die zweite Nachricht über den Umweg des dritten oder vierten Netzwerkelements an den Benutzer-Netzwerkknoten adressiert werden.

Das hierin beschriebene Verfahren zur Datenübertragung in einem Netzwerksystem ist ebenso auf das erfindungsgemäße Netzwerksystem und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines Verfahrens zur Datenübertragung in einem Netzwerksystem sowie eines zugrunde gelegten Netzwerksystems gemäß einer bevorzugten Ausführungsform der Erfindung; und
- Fig. 2: ein Ablaufdiagramm des Verfahrens zur Datenübertragung in dem Netzwerksystem sowie des zugrunde gelegten Netzwerksystems gemäß einer weiteren bevorzugten Ausführungsform der Erfindung.

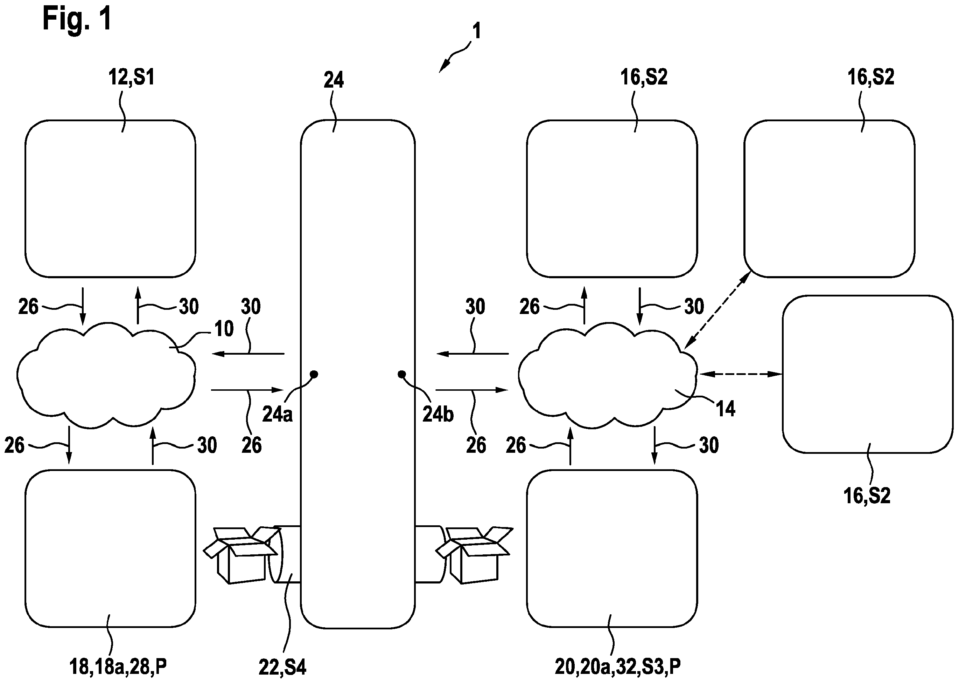

Das in Fig. 1 gezeigte Verfahren zur Datenübertragung in einem Netzwerksystem 1 umfasst ein Bereitstellen S1 eines mit einem ersten Netzwerk 10 verbundenen ersten Netzwerkelements 12, insbesondere eines Benutzer-Netzwerkknotens, und eines mit einem zweiten Netzwerk 14, insbesondere einem Cluster-Netzwerk, verbundenen zweiten Netzwerkelements 16, insbesondere eines Ziel-Netzwerkknotens. Das zweite Netzwerkelement 16 weist hierbei nicht das Benutzerrecht auf, eine virtuelle Netzwerkschnittstelle zu erstellen.

Das Verfahren umfasst ferner ein Bereitstellen S2 eines, mit dem ersten Netzwerk 10 verbundenen, virtuellen dritten Netzwerkelements 18 und eines, mit dem zweiten Netzwerk 14 verbundenen, virtuellen vierten Netzwerkelements 20. Das dritte Netzwerkelement 18 und das vierte Netzwerkelement 20 können alternativ beispielsweise physisch ausgebildet sein.

Das erste Netzwerkelement 12 ist über einen ersten Netzwerk-Controller mit dem ersten Netzwerk 10 verbunden. Das zweite Netzwerkelement 16 ist über einen zweiten Netzwerk-Controller mit dem zweiten Netzwerk 14 verbunden.

Darüber hinaus umfasst das Verfahren ein Betreiben S3 eines Netzwerk-Controllers 20a des vierten Netzwerkelements 20 in einem promiskuitiven Modus P und ein Erstellen S4 eines IP-Tunnels 22 zwischen dem ersten Netzwerk 10 und dem zweiten Netzwerk 14, wobei das dritte Netzwerkelement 18 und das vierte Netzwerkelement 20 jeweilige Endpunkte des über ein Zugangs-Element 24 geführten IP-Tunnels 22 sind.

Von dem ersten Netzwerkelement 12 wird zunächst eine erste Nachricht 26 in das erste Netzwerk 10 gesendet. Die erste Nachricht 26 ist an eine IP-Adresse und einen Port des zweiten Netzwerkelements 16 adressiert.

Alternativ kann die erste Nachricht 26 beispielsweise an eine IP-Adresse und einen Port eines anderen Netzwerkelements adressiert sein, welche durch ein weiteres Netzwerkelement, insbesondere das dritte Netzwerkelement 18 und/oder vierte Netzwerkelement 20, in eine IP-Adresse und einen Port des zweiten Netzwerkelements 16 umgewandelt wird.

Das dritte Netzwerkelement 18 empfängt in das erste Netzwerk 10 eingehende Pakete der ersten Nachricht 26. Ferner verpackt das dritte Netzwerkelement 18 die erste Nachricht 26 in eine erste Hülle 28. Ein Netzwerk-Controller 18a des dritten Netzwerkelements 18 wird gemäß der vorliegenden Ausführungsform in einem promiskuitiven Modus P betrieben. Alternativ kann der Netzwerkcontroller beispielsweise in einem nicht-promiskuitiven Modus betrieben werden.

Die in die erste Hülle 28 verpackte erste Nachricht 26 ist dabei an einen ersten Tunnel-Port 24a des Zugangs-Elements 24 adressiert und wird von dem dritten Netzwerkelement 18 an den ersten Tunnel-Port 24a des Zugangs-Elements 24 gesendet.

Der erste Tunnel-Port 24a des Zugangs-Elements 24 ist derart vorkonfiguriert, dass der erste Tunnel-Port 24a eingehende Nachrichten automatisch an das virtuelle vierte Netzwerkelement 20, insbesondere einen Server-Netzwerkknoten, sendet.

Das virtuelle vierte Netzwerkelement 20, insbesondere der Server-Netzwerkknoten, entpackt die von dem Zugangs-Element 24 empfangene, in die erste Hülle 28 verpackte erste Nachricht 26. Die entpackte erste Nachricht 26 wird ferner von dem vierten Netzwerkelement 20 unter Verwendung des promiskuitiven Modus P, über das zweite Netzwerk 14 an das zweite Netzwerkelement 16, insbesondere den Ziel-Netzwerkknoten, gesendet.

Von dem zweiten Netzwerkelement 16 wird, unter Verwendung eines dynamisch zugewiesenen Ports des zweiten Netzwerkelements 16, eine zweite Nachricht 30 in das zweite Netzwerk 14 gesendet. Die zweite Nachricht 30 ist dabei an eine IP-Adresse und einen Port des ersten Netzwerkelements 12 adressiert.

Das vierte Netzwerkelement 20 empfängt, insbesondere snifft, in das zweite Netzwerk 14 eingehende Pakete der zweiten Nachricht 30 unter Verwendung des promiskuitiven Modus P des Netzwerk-Controllers 20a des vierten Netzwerkelements 20. Das vierte Netzwerkelement 20 verpackt ferner die zweite Nachricht 30 in eine zweite Hülle 32.

Die in die zweite Hülle 32 verpackte zweite Nachricht 30 ist an einen zweiten Tunnel-Port 24b des Zugangs-Elements 24 adressiert und wird von dem vierten Netzwerkelement 20 an den zweiten Tunnel-Port 24b des Zugangs-Elements 24 gesendet.

Der zweite Tunnel-Port 24b des Zugangs-Elements 24 wird dynamisch, insbesondere zur Laufzeit unter Verwendung von Informationen aus der ersten Nachricht 26, derart konfiguriert, dass der zweite Tunnel-Port 24b eingehende Nachrichten automatisch an das physische oder virtuelle dritte Netzwerkelement 18, insbesondere den Client-Netzwerkknoten, sendet.

Das virtuelle dritte Netzwerkelement 18, insbesondere der Client-Netzwerkknoten, entpackt die von dem Zugangs-Element 24 empfangene, in die zweite Hülle 32 verpackte zweite Nachricht 30. Die entpackte zweite Nachricht 30 wird dabei von dem dritten Netzwerkelement 18 über das erste Netzwerk 10 an das erste Netzwerkelement 12, insbesondere den Benutzer-Netzwerkknoten, gesendet.

Die erste Nachricht 26 weist eine IP- und MAC-Adresse des ersten Netzwerkelements 12 auf, wobei das dritte Netzwerkelement 18 oder das vierte Netzwerkelement 20 die IP- und MAC-Adresse des ersten Netzwerkelements 12 durch eine IP- und MAC-Adresse des vierten Netzwerkelements 20 ersetzt. Die IP- und MAC-Adresse des ersten Netzwerkelements ist hierbei eine Sender IP- und MAC-Adresse.

Die zweite Nachricht 30 weist ferner eine Empfänger-IP- und MAC-Adresse, insbesondere das vierte Netzwerkelement 20, auf. Einer der Endpunkte des IP-Tunnels 22, insbesondere das erste Netzwerkelement 12, das dritte Netzwerkelement 18 oder das vierte Netzwerkelement 20 ersetzt hierbei die Empfänger-IP- und MAC-Adresse der zweiten Nachricht 30 durch eine IP- und MAC-Adresse des ersten Netzwerkelements 12.

Das in Fig. 1 gezeigte Netzwerksystem 1 zur Datenübertragung zwischen einem ersten Netzwerkelement 12 und einem zweiten Netzwerkelement 16 umfasst ein mit einem ersten Netzwerk 10 verbundenes erstes Netzwerkelement 12, insbesondere einen Benutzer-Netzwerkknoten und ein mit einem zweiten Netzwerk 14, insbesondere einem Cluster-Netzwerk, verbundenes zweites Netzwerkelement, insbesondere einen Ziel-Netzwerkknoten.

Das zweite Netzwerkelement 16 weist dabei nicht das Benutzerrecht aufweist, eine virtuelle Netzwerkschnittstelle zu erstellen. Ferner umfasst das Netzwerksystem 1 ein, mit dem ersten Netzwerk 10 verbundenes, virtuelles, drittes Netzwerkelement und ein, mit dem zweiten Netzwerk 14 verbundenes, virtuelles, viertes Netzwerkelement.

Das dritte Netzwerkelement 18 und das vierte Netzwerkelement 20 können alternativ beispielsweise physisch ausgebildet sein. Ein Netzwerk-Controller 20a des vierten Netzwerkelements 20 ist in einem promiskuitiven Modus P betreibbar. Ferner sind das dritte Netzwerkelement 18 und das vierte Netzwerkelement 20 jeweilige Endpunkte eines über ein Zugangs-Element 24 geführten IP-Tunnels 22.

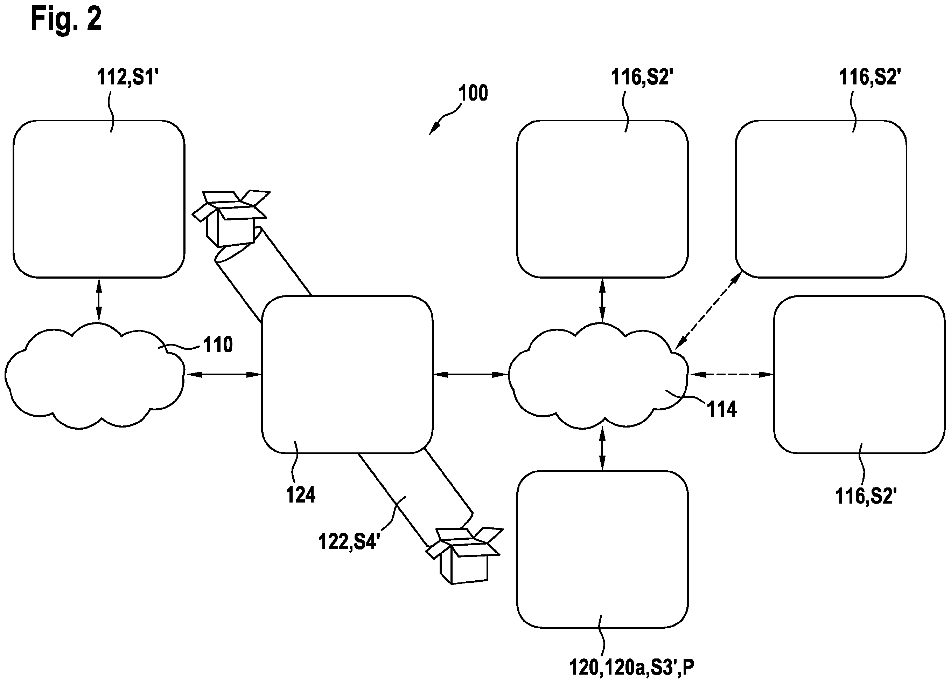

Fig. 2 zeigt ein Ablaufdiagramm des Verfahrens zur Datenübertragung in dem Netzwerksystem sowie des zugrunde gelegten Netzwerksystems gemäß einer weiteren bevorzugten Ausführungsform der Erfindung.

Das Verfahren umfasst ein Bereitstellen S1' eines mit einem ersten Netzwerk 10 verbundenen ersten Netzwerkelements 112, insbesondere eines Benutzer-Netzwerkknotens, und eines mit einem zweiten Netzwerk 114, insbesondere einem Cluster-Netzwerk, verbundenen zweiten Netzwerkelements 116, insbesondere eines Ziel-Netzwerkknotens, wobei das zweite Netzwerkelement 116 nicht das Benutzerrecht aufweist, eine virtuelle Netzwerkschnittstelle zu erstellen.

Des Weiteren umfasst das Verfahren ein Bereitstellen S2` eines, mit dem zweiten Netzwerk 114 verbundenen, physischen oder virtuellen, dritten Netzwerkelements 120 sowie ein Betreiben S3` eines Netzwerk-Controllers 120a des dritten Netzwerkelements 120 in einem promiskuitiven Modus P'.

Das Verfahren umfasst darüber hinaus ein Erstellen S4` eines IP-Tunnels 122 zwischen dem ersten Netzwerk 110 und dem zweiten Netzwerk 114, wobei das erste Netzwerkelement 112 und das dritte Netzwerkelement 120 jeweilige Endpunkte des über ein Zugangs-Element 124 geführten IP-Tunnels 122 sind.

Abgesehen von der geänderten Netzwerkarchitektur dieser Ausführungsform erfolgt die Netzwerkkommunikation analog dem in Fig. 1 dargestellten Verfahren. Daher wird von einer Wiederholung dieser Schritte abgesehen.

Das in Fig. 2 gezeigte Netzwerksystem 1 zur Datenübertragung zwischen einem ersten Netzwerkelement 12 und einem zweiten Netzwerkelement 16 umfasst ein Netzwerksystem 100 zur Datenübertragung zwischen einem ersten Netzwerkelement 112 und einem zweiten Netzwerkelement 116, umfassend ein mit einem ersten Netzwerk 110 verbundenes erstes Netzwerkelement, insbesondere einen Benutzer-Netzwerkknoten und ein mit einem zweiten Netzwerk 114, insbesondere einem Cluster-Netzwerk, verbundenes zweites Netzwerkelement, insbesondere einen Ziel-Netzwerkknoten.

Das zweite Netzwerkelement 116 weist dabei nicht das Benutzerrecht auf, eine virtuelle Netzwerkschnittstelle zu erstellen.

Ferner umfasst das Netzwerksystem 1 ein, mit dem zweiten Netzwerk 114 verbundenes, virtuelles drittes Netzwerkelement, wobei ein Netzwerk-Controller 120a des dritten Netzwerkelements 120 in einem promiskuitiven Modus P` betreibbar ist.

Zwischen dem ersten Netzwerk 110 und dem zweiten Netzwerk 114 ist ein IP-Tunnel 122 erstellt, wobei das erste Netzwerkelement 112 und das dritte Netzwerkelement 120 jeweilige Endpunkte des über ein Zugangs-Element 124 geführten IP-Tunnels 122 sind.

### Bezugszeichenliste

- 1, 100: Netzwerksystem
- 10, 110: erstes Netzwerk
- 12, 112: erstes Netzwerkelement
- 14, 114: zweites Netzwerk
- 16, 116: zweites Netzwerkelement
- 18: drittes Netzwerkelement
- 18a: Netzwerk-Controller
- 20: viertes Netzwerkelement
- 20a: Netzwerk-Controller
- 22, 122: IP-Tunnel
- 24, 124: Zugangs-Element
- 24a: erster Tunnel-Port
- 24b: zweiter Tunnel-Port
- 26: erste Nachricht
- 28: erste Hülle
- 30: zweite Nachricht
- 32: zweite Hülle
- 120: drittes Netzwerkelement
- 120a: Netzwerk-Controller
- P: promiskuitiver Modus
- S1-S4: Verfahrensschritte
- S1`-S4`: Verfahrensschritte

## Patentansprüche

1. Verfahren zur Datenübertragung in einem Netzwerksystem (1) umfassend die Schritte:
Bereitstellen (S1) eines mit einem ersten Netzwerk (10) verbundenen ersten Netzwerkelements (12), eines Benutzer-Netzwerkknotens, und eines mit einem zweiten Netzwerk (14),einem Cluster-Netzwerk, verbundenen zweiten Netzwerkelements (16),eines Ziel-Netzwerkknotens, wobei das zweite Netzwerkelement (16) nicht das Benutzerrecht aufweist, eine virtuelle Netzwerkschnittstelle zu erstellen;
Bereitstellen (S2) eines, mit dem ersten Netzwerk (10) verbundenen, physischen oder virtuellen, dritten Netzwerkelements (18) und eines, mit dem zweiten Netzwerk (14) verbundenen, physischen oder virtuellen, vierten Netzwerkelements (20);
Betreiben (S3) eines Netzwerk-Controllers (20a) des vierten Netzwerkelements (20) in einem promiskuitiven Modus (P); und
Erstellen (S4) eines IP-Tunnels (22) zwischen dem ersten Netzwerk (10) und dem zweiten Netzwerk (14), wobei das dritte Netzwerkelement (18) und das vierte Netzwerkelement (20) jeweilige Endpunkte des über ein Zugangs-Element (24) geführten IP-Tunnels (22) sind, wobei das dritte Netzwerkelement (18) in das erste Netzwerk (10) eingehende Pakete der ersten Nachricht (26) empfängt, wobei das dritte Netzwerkelement (18) die erste Nachricht (26) in eine erste Hülle (28) verpackt, und wobei ein Netzwerk-Controller (18a) des dritten Netzwerkelements (18) in einem promiskuitiven Modus (P) betrieben wird, wobei die in die erste Hülle (28) verpackte erste Nachricht (26) an einen ersten Tunnel-Port (24a) des Zugangs-Elements (24) adressiert ist und von dem dritten Netzwerkelement (18) an den ersten Tunnel-Port (24a) des Zugangs-Elements (24) gesendet wird, und wobei der erste Tunnel-Port (24a) des Zugangs-Elements (24) derart vorkonfiguriert ist, dass der erste Tunnel-Port (24a) eingehende Nachrichten automatisch an das physische oder virtuelle vierte Netzwerkelement (20), insbesondere einen Server-Netzwerkknoten, sendet.

2. Verfahren nach Anspruch 1, wobei von dem ersten Netzwerkelement (12) eine erste Nachricht (26) in das erste Netzwerk (10) gesendet wird, wobei die erste Nachricht (26) an eine IP-Adresse und einen Port des zweiten Netzwerkelements (16) oder an eine IP-Adresse und einen Port eines anderen Netzwerkelements, welche durch ein weiteres Netzwerkelement, insbesondere das dritte Netzwerkelement (18) und/oder vierte Netzwerkelement (20), in eine IP-Adresse und einen Port des zweiten Netzwerkelements (16) umgewandelt wird, adressiert ist.

3. Verfahren nach Anspruch 1, wobei das physische oder virtuelle vierte Netzwerkelement (20), insbesondere der Server-Netzwerkknoten, die von dem Zugangs-Element (24) empfangene, in die erste Hülle (28) verpackte erste Nachricht (26) entpackt, und wobei die entpackte erste Nachricht (26) von dem vierten Netzwerkelement (20) unter Verwendung des promiskuitiven Modus (P), über das zweite Netzwerk (14) an das zweite Netzwerkelement (16), insbesondere den Ziel-Netzwerkknoten, gesendet wird.

4. Verfahren nach einem der vorhergehenden Ansprüche, wobei von dem zweiten Netzwerkelement (16), unter Verwendung eines dynamisch zugewiesenen Ports des zweiten Netzwerkelements (16), eine zweite Nachricht (30) in das zweite Netzwerk (14) gesendet wird, wobei die zweite Nachricht (30) an eine IP-Adresse und einen Port des ersten Netzwerkelements (12) adressiert ist.

5. Verfahren nach einem der vorhergehenden Ansprüche, wobei das vierte Netzwerkelement (20) in das zweite Netzwerk (14) eingehende Pakete der zweiten Nachricht (30) unter Verwendung des promiskuitiven Modus (P) des Netzwerk-Controllers (20a) des vierten Netzwerkelements (20) empfängt, insbesondere snifft, und wobei das vierte Netzwerkelement (20) die zweite Nachricht (30) in eine zweite Hülle (32) verpackt.

6. Verfahren nach Anspruch 5, wobei die in die zweite Hülle (32) verpackte zweite Nachricht (30) an einen zweiten Tunnel-Port (24b) des Zugangs-Elements (24) adressiert ist und von dem vierten Netzwerkelement (20) an den zweiten Tunnel-Port (24b) des Zugangs-Elements (24) gesendet wird.

7. Verfahren nach Anspruch 6, wobei der zweite Tunnel-Port (24b) des Zugangs-Elements (24) dynamisch, insbesondere zur Laufzeit unter Verwendung von Informationen aus der ersten Nachricht (26), derart konfiguriert wird, dass der zweite Tunnel-Port (24b) eingehende Nachrichten automatisch an das physische oder virtuelle dritte Netzwerkelement (18), insbesondere einen Client-Netzwerkknoten, sendet.

8. Verfahren nach einem der Ansprüche 4 bis 7, wobei das physische oder virtuelle dritte Netzwerkelement (18), insbesondere der Client-Netzwerkknoten, die von dem Zugangs-Element (24) empfangene, in die zweite Hülle (32) verpackte zweite Nachricht (30) entpackt, und wobei die entpackte zweite Nachricht (30) von dem dritten Netzwerkelement (18) über das erste Netzwerk (10) an das erste Netzwerkelement (12), insbesondere den Benutzer-Netzwerkknoten, gesendet wird.

9. Verfahren nach einem der vorhergehenden Ansprüche, wobei die erste Nachricht (26) eine Sender-IP- und MAC-Adresse des ersten Netzwerkelements (12) aufweist, wobei das dritte Netzwerkelement (18) oder das vierte Netzwerkelement (20), die Sender-IP- und MAC-Adresse des ersten Netzwerkelements (12) durch eine IP- und MAC-Adresse des vierten Netzwerkelements (20) ersetzt.

10. Verfahren nach einem der vorhergehenden Ansprüche, wobei die zweite Nachricht (30) eine Empfänger-IP- und MAC-Adresse, insbesondere das vierte Netzwerkelement (20), aufweist, wobei einer der Endpunkte des IP-Tunnels (22), insbesondere das erste Netzwerkelement (12), das dritte Netzwerkelement (18) oder das vierte Netzwerkelement (20) die Empfänger-IP- und MAC-Adresse der zweiten Nachricht (30) durch eine IP- und MAC-Adresse des ersten Netzwerkelements (12) ersetzt.

11. Netzwerksystem (1) zur Datenübertragung zwischen einem ersten Netzwerkelement (12) und einem zweiten Netzwerkelement (16), umfassend:
ein mit einem ersten Netzwerk (10) verbundenes erstes Netzwerkelement, einen Benutzer-Netzwerkknoten;
ein mit einem zweiten Netzwerk (14), einem Cluster-Netzwerk, verbundenes zweites Netzwerkelement, einen Ziel-Netzwerkknoten, wobei das zweite Netzwerkelement (16) nicht das Benutzerrecht aufweist, eine virtuelle Netzwerkschnittstelle zu erstellen;
ein, mit dem ersten Netzwerk (10) verbundenes, physisches oder virtuelles, drittes Netzwerkelement (18); und
ein, mit dem zweiten Netzwerk (14) verbundenes, physisches oder virtuelles, viertes Netzwerkelement, wobei ein Netzwerk-Controller (20a) des vierten Netzwerkelements (20) in einem promiskuitiven Modus (P) betreibbar ist, und wobei das dritte Netzwerkelement (18) und das vierte Netzwerkelement (20) jeweilige Endpunkte eines über ein Zugangs-Element (24) geführten IP-Tunnels (22) sind, wobei das dritte Netzwerkelement (18) dazu eingerichtet ist, in das erste Netzwerk (10) eingehende Pakete der ersten Nachricht (26) zu empfangen, wobei das dritte Netzwerkelement (18) dazu eingerichtet ist, die erste Nachricht (26) in eine erste Hülle (28) zu verpacken, und wobei ein Netzwerk-Controller (18a) des dritten Netzwerkelements (18) in einem promiskuitiven Modus (P) betreibbar ist, wobei die in die erste Hülle (28) verpackte erste Nachricht (26) an einen ersten Tunnel-Port (24a) des Zugangs-Elements (24) adressiert ist und von dem dritten Netzwerkelement (18) an den ersten Tunnel-Port (24a) des Zugangs-Elements (24) sendbar ist, und wobei der erste Tunnel-Port (24a) des Zugangs-Elements (24) derart vorkonfiguriert ist, dass der erste Tunnel-Port (24a) eingehende Nachrichten automatisch an das physische oder virtuelle vierte Netzwerkelement (20), insbesondere einen Server-Netzwerkknoten, sendet.

## Claims

1. A method for data transmission in a network system (1) comprising the steps of:
providing (S1) a first network element (12) connected to a first network (10), a user network node, and a second network element (16) connected to a second network (14), a cluster network, and a target network node, wherein the second network element (16) does not have the user right to create a virtual network interface;
providing (S2) a physical or virtual third network element (18) connected to the first network (10) and a physical or virtual fourth network element (20) connected to the second network (14);
operating (S3) a network controller (20a) of the fourth network element (20) in a promiscuous mode (P); and
creating (S4) an IP tunnel (22) between the first network (10) and the second network (14), wherein the third network element (18) and the fourth network element (20) are respective end points of the IP tunnel (22) routed via an access element (24), wherein the third network element (18) receives incoming packets of the first message (26) into the first network (10), wherein the third network element (18) packs the first message (26) in a first envelope (28), and wherein a network controller (18a) of the third network element (18) is operated in a promiscuous mode (P), wherein the first message (26) packed in the first envelope (28) is addressed to a first tunnel port (24a) of the access element (24) and is sent from the third network element (18) to the first tunnel port (24a) of the access element (24), and wherein the first tunnel port (24a) of the access element (24) is preconfigured such that the first tunnel port (24a) automatically sends incoming messages to the physical or virtual fourth network element (20), in particular a server network node.

2. The method according to claim 1, wherein a first message (26) is sent from the first network element (12) into the first network (10), wherein the first message (26) is addressed to an IP address and a port of the second network element (16) or to an IP address and a port of another network element, which is converted into an IP address and a port of the second network element (16) by a further network element, in particular the third network element (18) and/or fourth network element (20).

3. The method according to claim 1, wherein the physical or virtual fourth network element (20), in particular the server network node, unpacks the first message (26) received from the access element (24) and packed in the first envelope (28), and wherein the unpacked first message (26) is sent from the fourth network element (20), using the promiscuous mode (P), to the second network element (16), in particular the target network node, via the second network (14).

4. The method according to any one of the preceding claims, wherein a second message (30) is sent from the second network element (16) to the second network (14) using a dynamically assigned port of the second network element (16), wherein the second message (30) is addressed to an IP address and a port of the first network element (12).

5. The method according to any one of the preceding claims, wherein the fourth network element (20) receives, in particular sniffs, incoming packets of the second message (30) into the second network (14) using the promiscuous mode (P) of the network controller (20a) of the fourth network element (20), and wherein the fourth network element (20) packs the second message (30) in a second envelope (32).

6. The method according to claim 5, wherein the second message (30) packed in the second envelope (32) is addressed to a second tunnel port (24b) of the access element (24) and is sent from the fourth network element (20) to the second tunnel port (24b) of the access element (24).

7. The method according to claim 6, wherein the second tunnel port (24b) of the access element (24) is configured dynamically, in particular at runtime, using information from the first message (26), such that the second tunnel port (24b) automatically sends incoming messages to the physical or virtual third network element (18), in particular a client network node.

8. The method according to any one of claims 4 to 7, wherein the physical or virtual third network element (18), in particular the client network node, unpacks the second message (30) received from the access element (24) and packed in the second envelope (32), and wherein the unpacked second message (30) is sent from the third network element (18) to the first network element (12), in particular the user network node, via the first network (10).

9. The method according to any one of the preceding claims, wherein the first message (26) comprises a sender IP and MAC address of the first network element (12), wherein the third network element (18) or the fourth network element (20), replaces the sender IP and MAC address of the first network element (12) with an IP and MAC address of the fourth network element (20).

10. The method according to any one of the preceding claims, wherein the second message (30) comprises a recipient IP and MAC address, in particular the fourth network element (20), wherein one of the end points of the IP tunnel (22), in particular the first network element (12), the third network element (18) or the fourth network element (20), replaces the recipient IP and MAC address of the second message (30) with an IP and MAC address of the first network element (12).

11. A network system (1) for data transmission between a first network element (12) and a second network element (16), comprising:
a first network element connected to a first network (10), a user network node;
a second network element connected to a second network (14), a cluster network, and a target network node, wherein the second network element (16) does not have the user right to create a virtual network interface;
a physical or virtual third network element (18) connected to the first network (10); and
a physical or virtual fourth network element connected to the second network (14), wherein a network controller (20a) of the fourth network element (20) is operable in a promiscuous mode (P), and wherein the third network element (18) and the fourth network element (20) are respective end points of an IP tunnel (22) routed via an access element (24), wherein the third network element (18) is configured to receive incoming packets of the first message (26) into the first network (10), wherein the third network element (18) is configured to pack the first message (26) in a first envelope (28), and wherein a network controller (18a) of the third network element (18) is operable in a promiscuous mode (P), wherein the first message (26) packed in the first envelope (28) is addressed to a first tunnel port (24a) of the access element (24) and is transmittable from the third network element (18) to the first tunnel port (24a) of the access element (24), and wherein the first tunnel port (24a) of the access element (24) is preconfigured such that the first tunnel port (24a) automatically sends incoming messages to the physical or virtual fourth network element (20), in particular a server network node.

## Revendications

1. Procédé de transmission de données dans un système de réseau (1), comprenant les étapes consistant à :
fournir (S1) un premier élément de réseau (12) connecté à un premier réseau (10), un noeud de réseau utilisateur et un deuxième élément de réseau (16) connecté à un deuxième réseau (14), un réseau en grappe, un noeud de réseau cible, le deuxième élément de réseau (16) ne possédant pas le droit d'utilisateur de créer une interface de réseau virtuelle ;
fournir (S2) un troisième élément de réseau (18) physique ou virtuel connecté au premier réseau (10) et un quatrième élément de réseau (20) physique ou virtuel connecté au deuxième réseau (14) ;
faire fonctionner (S3) un contrôleur de réseau (20a) du quatrième élément de réseau (20) dans un mode promiscuité (P) ; et
créer (S4) un tunnel IP (22) entre le premier réseau (10) et le deuxième réseau (14), le troisième élément de réseau (18) et le quatrième élément de réseau (20) étant des points terminaux respectifs du tunnel IP (22) passant par un élément d'accès (24), le troisième élément de réseau (18) recevant des paquets du premier message (26) entrant dans le premier réseau (10), le troisième élément de réseau (18) enveloppant le premier message (26) dans une première enveloppe (28), et un contrôleur de réseau (18a) du troisième élément de réseau (18) fonctionnant dans un mode promiscuité (P), le premier message (26) enveloppé dans la première enveloppe (28) étant adressé à un premier port tunnel (24a) de l'élément d'accès (24) et étant envoyé par le troisième élément de réseau (18) au premier port tunnel (24a) de l'élément d'accès (24), et le premier port tunnel (24a) de l'élément d'accès (24) étant préconfiguré de telle sorte que le premier port tunnel (24a) envoie automatiquement des messages entrants au quatrième élément de réseau physique ou virtuel (20), en particulier un noeud de réseau serveur.

2. Procédé selon la revendication 1, un premier message (26) étant envoyé par le premier élément de réseau (12) dans le premier réseau (10), le premier message (26) étant adressé à une adresse IP et à un port du deuxième élément de réseau (16) ou à une adresse IP et à un port d'un autre élément de réseau, lequel est converti par un élément de réseau supplémentaire, en particulier le troisième élément de réseau (18) et/ou le quatrième élément de réseau (20), en une adresse IP et un port du deuxième élément de réseau (16).

3. Procédé selon la revendication 1, le quatrième élément de réseau (20) physique ou virtuel, en particulier le noeud de réseau serveur, décompressant le premier message (26) reçu de l'élément d'accès (24) et enveloppé dans la première enveloppe (28), et le premier message (26) décompressé étant envoyé par le quatrième élément de réseau (20), en utilisant le mode promiscuité (P), au deuxième élément de réseau (16), en particulier au noeud de réseau cible, par le biais du deuxième réseau (14).

4. Procédé selon l'une des revendications précédentes, un deuxième message (30) étant envoyé dans le deuxième réseau (14) par le deuxième élément de réseau (16) en utilisant un port attribué dynamiquement du deuxième élément de réseau (16), le deuxième message (30) étant adressé à une adresse IP et à un port du premier élément de réseau (12).

5. Procédé selon l'une des revendications précédentes, le quatrième élément de réseau (20) recevant, notamment reniflant, des paquets du deuxième message (30) entrant dans le deuxième réseau (14) en utilisant le mode promiscuité (P) du contrôleur de réseau (20a) du quatrième élément de réseau (20), et le quatrième élément de réseau (20) enveloppant le deuxième message (30) dans une deuxième enveloppe (32) .

6. Procédé selon la revendication 5, le deuxième message (30) enveloppé dans la deuxième enveloppe (32) étant adressé à un deuxième port tunnel (24b) de l'élément d'accès (24) et étant envoyé par le quatrième élément de réseau (20) au deuxième port tunnel (24b) de l'élément d'accès (24).

7. Procédé selon la revendication 6, le deuxième port tunnel (24b) de l'élément d'accès (24) étant configuré de manière dynamique, en particulier pendant la durée d'exécution en utilisant des informations issues du premier message (26), de telle sorte que le deuxième port tunnel (24b) envoie automatiquement des messages entrants au troisième élément de réseau (18) physique ou virtuel, en particulier un noeud de réseau client.

8. Procédé selon l'une des revendications 4 à 7, le troisième élément de réseau (18) physique ou virtuel, en particulier le noeud de réseau client, décompressant le deuxième message (30) reçu de l'élément d'accès (24) et enveloppé dans la deuxième enveloppe (32), et le deuxième message décompressé (30) étant envoyé par le troisième élément de réseau (18) au premier élément de réseau (12), notamment au noeud de réseau utilisateur, par le biais du premier réseau (10).

9. Procédé selon l'une des revendications précédentes, le premier message (26) possédant une adresse IP et MAC d'émetteur du premier élément de réseau (12), le troisième élément de réseau (18) ou le quatrième élément de réseau (20) remplaçant l'adresse IP et MAC d'émetteur du premier élément de réseau (12) par une adresse IP et MAC du quatrième élément de réseau (20) .

10. Procédé selon l'une des revendications précédentes, le deuxième message (30) possédant une adresse IP et MAC de destinataire, notamment le quatrième élément de réseau (20), l'un des points terminaux du tunnel IP (22), en particulier le premier élément de réseau (12), le troisième élément de réseau (18) ou le quatrième élément de réseau (20), remplaçant l'adresse IP et MAC de destinataire du deuxième message (30) par une adresse IP et MAC du premier élément de réseau (12).

11. Système de réseau (1) destiné à la transmission de données entre un premier élément de réseau (12) et un deuxième élément de réseau (16), comprenant :
un premier élément de réseau connecté à un premier réseau (10), un noeud de réseau utilisateur ;
un deuxième élément de réseau connecté à un deuxième réseau (14), un réseau en grappe, un noeud de réseau cible, le deuxième élément de réseau (16) ne possédant pas le droit d'utilisateur de créer une interface de réseau virtuelle ;
un troisième élément de réseau (18), physique ou virtuel, connecté au premier réseau (10) ; et
un quatrième élément de réseau physique ou virtuel connecté au deuxième réseau (14), un contrôleur de réseau (20a) du quatrième élément de réseau (20) pouvant fonctionner dans un mode promiscuité (P), et le troisième élément de réseau (18) et le quatrième élément de réseau (20) étant des points terminaux respectifs d'un tunnel IP (22) passant par un élément d'accès (24), le troisième élément de réseau (18) étant conçu pour recevoir des paquets du premier message (26) entrant dans le premier réseau (10), le troisième élément de réseau (18) étant conçu pour envelopper le premier message (26) dans une première enveloppe (28), et un contrôleur de réseau (18a) du troisième élément de réseau (18) pouvant fonctionner dans un mode promiscuité (P), le premier message (26) enveloppé dans la première enveloppe (28) étant adressé à un premier port de tunnel (24a) de l'élément d'accès (24) et pouvant être envoyé par le troisième élément de réseau (18) au premier port de tunnel (24a) de l'élément d'accès (24), et le premier port de tunnel (24a) de l'élément d'accès (24) étant préconfiguré de telle sorte que le premier port de tunnel (24a) envoie automatiquement des messages entrants au quatrième élément de réseau (20) physique ou virtuel, en particulier à un noeud de réseau serveur.
